# EUROPEAN PATENT APPLICATION

(11) **EP 4 234 284 A1**
(43) Date of publication of application: **30.08.2023**
(21) Application number: 21906290.8
(22) Date of filing: 25.11.2021
(51) Int. Cl.: B60H 1/00, B60H 1/32

(54) **CASING UNIT**

(30) Priority: 16.12.2020 JP 2020208378
(71) Applicant: Mitsubishi Heavy Industries Thermal Systems, Ltd., Tokyo, 100-8332 (JP)
(72) Inventor: TAKEZAWA, Hideyuki, Tokyo 100-8332 (JP)
(74) Representative: Cabinet Beau de Loménie
(86) International application number: PCT/JP2021/043199
(87) International publication number: WO 2022/130927

(57) **Abstract**

A casing unit includes a first casing, and a second casing configured to be combined with the first casing from a first direction. The first casing includes a first casing main body and a protrusion. The second casing includes a second casing main body provided with an accommodating groove into which the protrusion is to be accommodated. Any one of the protrusion and the second casing main body is provided with a guiding part that relatively moves the first casing and the second casing in a second direction, in response to combining the first casing and the second casing. The second casing further includes an overlapping part that overlaps with the first casing main body in the first direction in a combined state, and that is elastically deformable in response to relative movement of the first casing and the second casing in the second direction.

## Description

### Technical Field

The present disclosure relates to a casing unit.

The present application claims priority to Japanese Patent Application No. 2020-208378 filed in Japan on December 16, 2020, the content of which is incorporated herein by reference.

### Background Art

An HVAC unit in a vehicular air conditioning device, for example, mainly includes equipment such as a heat exchanger and a fan, and a resin casing unit that covers the equipment from the outside. A flow path through which airflow generated by the fan flows is formed inside the casing unit. In order to supply airflow into the vehicle without causing a loss, it is important to maintain airtightness of this flow path.

As a measure for ensuring airtightness of the casing unit, a measure such as that described in Patent Document 1 below is known. An air conditioning case according to Patent Document 1 includes a recess formed in a first case body and a protrusion provided in a second case body and inserted into the recess. A side surface of the protrusion is formed as a tapered part. As the protrusion is inserted into the recess, the protrusion is pressed by the tapered part, so that the recess elastically deforms and expands. This causes the first case body and the second case body to be in close contact with each other and maintain airtightness.

### Citation List

### Patent Literature

Patent Document 1: JP 2018-177198 A

### Summary of Invention

### Technical Problem

However, when the recess elastically deforms so as to expand as described above, a large force is required when the protrusion is inserted. Therefore, there is a possibility that assembly of the casing unit cannot be smoothly performed.

The present disclosure has been made to solve the above problems, and an object is to provide a casing unit that has higher airtightness and liquid tightness and can be easily assembled.

### Solution to Problem

In order to solve the above problem, a casing unit according to the present disclosure is a casing unit including: a first casing; and a second casing configured to be combined with the first casing from a first direction, in which the first casing includes a first casing main body, and a protrusion that protrudes from the first casing main body toward the second casing, the second casing includes a second casing main body provided with an accommodating groove that accommodates the protrusion, any one of the protrusion and the second casing main body is provided with a guiding part that relatively moves the first casing and the second casing in a second direction intersecting the first direction, in response to combining the first casing and the second casing in the first direction, and the second casing further includes an overlapping part that overlaps the first casing main body in the first direction in the combined state, the overlapping part being elastically deformable in response to the first casing and the second casing relatively moving in the second direction.

### Advantageous Effects of Invention

According to the present disclosure, it is possible to provide a casing unit that has higher airtightness and liquid tightness and can be easily assembled.

### Brief Description of Drawings

FIG. 1 is a schematic diagram illustrating a configuration of a casing unit according to a first embodiment of the present disclosure.
FIG. 2 is an enlarged cross-sectional view of a main part of the casing unit according to the first embodiment of the present disclosure.
FIG. 3 is an explanatory view illustrating a state in the middle of assembling the casing unit according to the first embodiment of the present disclosure.
FIG. 4 is an enlarged cross-sectional view of a main part illustrating a modification of the casing unit according to the first embodiment of the present disclosure.
FIG. 5 is an enlarged cross-sectional view of a main part of a casing unit according to a second embodiment of the present disclosure.

### Description of Embodiments

### First Embodiment

### Configuration of Casing Unit

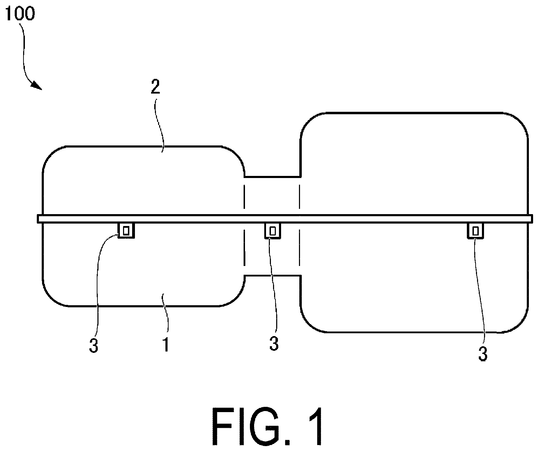

Hereinafter, a casing unit 100 according to the first embodiment of the present disclosure will be described with reference to FIGS. 1 to 3. The casing unit 100 is a resin container that accommodates a fan, a heat exchanger, a damper, and the like of a vehicular air conditioning device, for example. As illustrated in FIG. 1, the casing unit 100 includes a first casing 1 forming a lower half and a second casing 2 forming an upper half and combined with the first casing 1. The first casing 1 and the second casing 2 are provided with, inside therein, a space for accommodating the above-described various types of equipment and a flow path for guiding blowing.

The first casing 1 and the second casing 2 are provided with a plurality of engaging portions 3 for fixing them so as not to fall off from each other. In the following description, a direction in which the first casing 1 and the second casing 2 are combined is called a first direction D1. In the horizontal direction orthogonal to the first direction D1, a direction corresponding to the inner and outer directions of the casing unit 100 is called a second direction D2.

### Configuration of First Casing

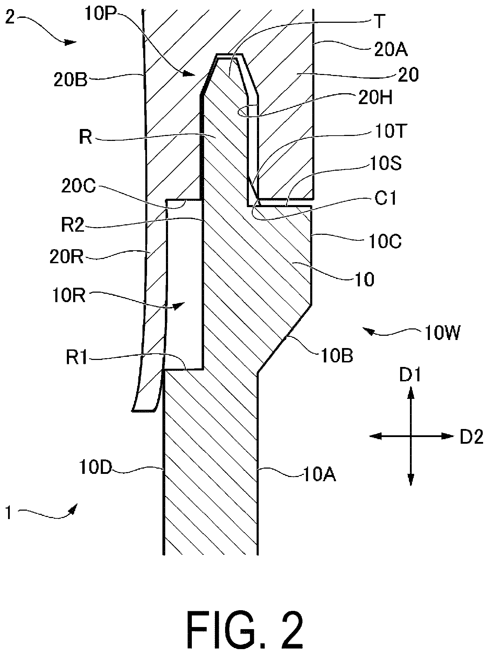

Next, the configuration of a joint part of the casing unit 100 will be described with reference to FIG. 2. FIG. 2 illustrates a cross section of a part different from the engaging portion 3 described above. As illustrated in the figure, the first casing 1 includes a first casing main body 10, a protrusion 10P, and a tapered part 10T.

The first casing main body 10 has a first end surface 10S facing one side in the first direction D1, an outer surface 10W extending from an end edge of the first end surface 10S on one side in the second direction D2 toward the other side in the first direction D1, and an inner surface 10D facing a side opposite to the outer surface 10W in the second direction D2.

The protrusion 10P is provided on the first end surface 10S. The protrusion 10P protrudes from the first end surface 10S toward one side in the first direction D1. The dimension (that is, the thickness) of the protrusion 10P in the second direction D2 is set to be smaller than the dimension of the first end surface 10S in the second direction D2.

The protrusion 10P has a base portion R and a tip portion T. Both surfaces of the base portion R in the second direction D2 extend parallel to the first direction D1. The tip portion T has a tapered cross-sectional shape where the dimension in the second direction D2 gradually decreases toward one side of the first direction D1.

The tapered part 10T as a guiding part is formed between the base portion R of the protrusion 10P and the first end surface 10S. The tapered part 10T extends from a surface of the base portion R facing one side in the second direction D2 to the first end surface 10S. More specifically, the tapered part 10T has an end edge extending toward one side in the second direction D2 from the base portion R toward the first end surface 10S. A plurality of such tapered parts 10T are provided at intervals over the entire extension length of the protrusion 10P.

The outer surface 10W has a main surface 10A, an inclined surface 10B, and a parallel surface 10C. The main surface 10A and the parallel surface 10C extend in the first direction D1. The inclined surface 10B extends obliquely toward one side in the second direction D2 from the main surface 10A toward the parallel surface 10C. These outer surfaces 10W are surfaces facing outward of the casing unit 100.

The inner surface 10D is a surface facing a side opposite to the main surface 10A, and is a surface facing the inside of the casing unit 100. The inner surface 10D is provided with a recess 10R in a part overlapping the inclined surface 10B and the parallel surface 10C in the first direction D1. The recess 10R is recessed from the inner surface 10D toward one side in the second direction D2.

Specifically, the recess 10R includes a bottom surface R1 facing one side in the first direction D1 and a side surface R2 connected to the bottom surface R1 and facing the other side in the second direction D2. The upper end of the side surface R2 is continuous with the base portion R of the protrusion 10P. That is, no step or the like is formed between the base portion R and the side surface R2.

### Configuration of Second Casing

The second casing 2 includes a second casing main body 20 and an overlapping part 20R. The second casing main body 20 has a thickness substantially identical to the thickness (that is, the dimension in the second direction D2) from the parallel surface 10C to the inner surface 10D of the first casing main body 10. The second casing main body 20 has an outer surface 20A facing outward, an inner surface 20B facing inward, and a second end surface 20C facing the other side in the first direction D1 (that is, facing the first casing 1 side).

The second end surface 20C is provided with an accommodating groove 20H in which the above-described protrusion 10P is accommodated. The accommodating groove 20H is recessed from the second end surface 20C toward one side in the first direction D1. The dimension of the accommodating groove 20H in the second direction D2 is set to be slightly larger than the dimension of the protrusion 10P in the second direction D2. In a state where the first casing 1 and the second casing 2 are combined, a gap is formed between an end surface on one side of the protrusion 10P in the second direction D2 and the accommodating groove 20H. On the other hand, the end surface on the other side of the protrusion 10P and the accommodating groove 20H are in a state of close contact with each other. At this time, a corner C1 between the second end surface 20C and the accommodating groove 20H is in a state of contact with the above-described tapered part 10T.

The overlapping part 20R is provided on the other side of the second end surface 20C in the second direction D2. The overlapping part 20R extends from the second end surface 20C toward the other side in the first direction D1. The thickness (that is, the dimension in the second direction D2) of the overlapping part 20R is set to be smaller than the thickness of the second casing main body 20. The length (that is, the dimension in the first direction D1) of the overlapping part 20R is set to be larger than the length of the protrusion 10P. In the state where the first casing 1 and the second casing 2 are combined, the overlapping part 20R closes the above-described recess 10R from the other side in the second direction D2. At this time, the overlapping part 20R is in a state of being elastically deformed so as to be slightly curved toward the other side in the second direction D2 with the connection part with the second end surface 20C as a fulcrum. That is, the overlapping part 20R abuts on the inner surface 10D in a state where an elastic restoring force is applied.

### Operational Effects

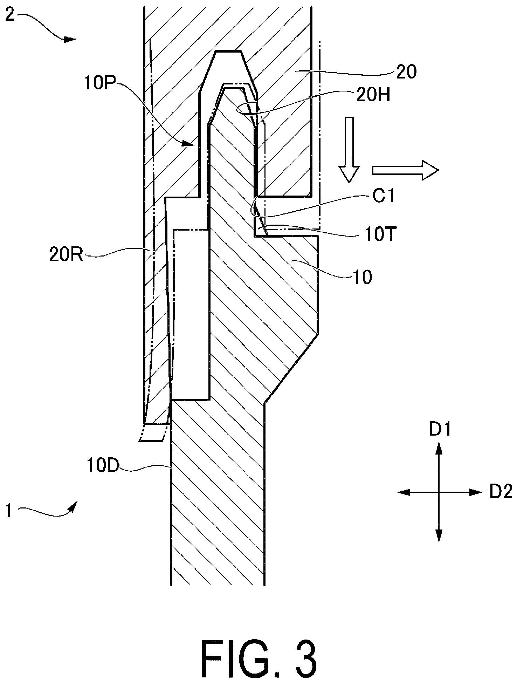

Next, behavior of each part when the casing unit 100 is assembled will be described with reference to FIG. 3. As illustrated in the figure, in assembling the casing unit 100, first, the first casing 1 and the second casing 2 face each other in the first direction D1. Next, the second casing 2 is moved in the first direction D1 with respect to the first casing 1, and the protrusion 10P is brought into a state of being inserted halfway into the accommodating groove 20H. At this time, the overlapping part 20R is in a state of abutting on the inner surface 10D but not elastically deforming.

From the above state, the second casing 2 is further moved in the first direction D 1. Then, the corner C1 of the accommodating groove 20H abuts on the tapered part 10T. When the second casing 2 is still moved, the entire second casing 2 is moved toward one side in the second direction D2 by the corner C1 being guided by the tapered part 10T. That is, the second casing 2 moves relative to the first casing 1 in the second direction D2. Due to this, in a state where the entire protrusion 10P is accommodated in the accommodating groove 20H, the protrusion 10P and the inner surface of the accommodating groove 20H are brought into close contact with each other as described on the basis of FIG. 2. At this time, since the second casing 2 has moved in the second direction D2, the overlapping part 20R is brought into a state of elastically deforming while abutting on the inner surface 10D.

According to the above configuration, the first casing 1 and the second casing 2 relatively move in the second direction D2 by the tapered part 10T serving as the guiding part, so that the first casing 1 and the second casing 2 are brought into a state of being strongly in close contact with each other. This can ensure higher airtightness and liquid tightness. In addition, since the overlapping part 20R elastically deforms in a state of overlapping the first casing main body 10, airtightness and liquid tightness can be further enhanced by the overlapping part 20R. Since the part to be elastically deformed at the time of assembly is limited to only the overlapping part 20R, assembly can be easily performed without requiring a large force.

Furthermore, according to the above configuration, since the dimension of the overlapping part 20R is larger than that of the protrusion 10P, the overlapping part 20R can be more easily elastically deformed along with insertion of the protrusion 10P. This makes it possible to perform assembly without requiring a large force.

According to the above configuration, when the protrusion 10P is inserted into the accommodating groove 20H, the second casing 2 relatively moves in the second direction D2 along the tapered part 10T. This makes it possible to cause the first casing 1 and the second casing 2 to be brought strongly into close contact with each other. By forming the tapered part 10T, it is possible to largely secure the base portion R (the part on the opposite side of the tip portion T) of the protrusion 10P, and therefore it is also possible to enhance the strength of the protrusion 10P.

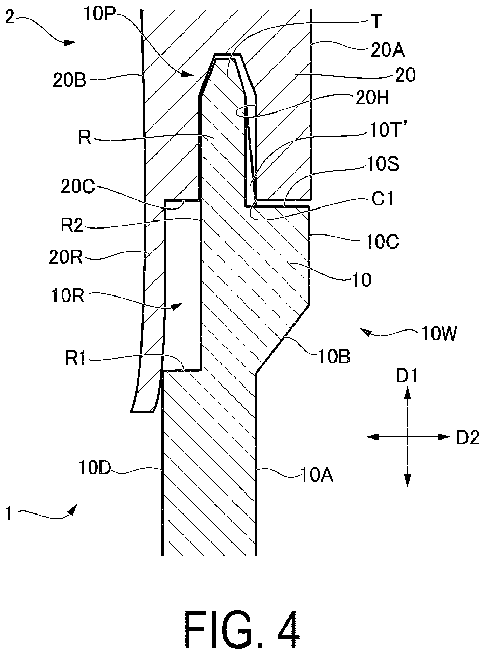

The first embodiment of the present disclosure has been described above. Note that various changes and modifications can be made to the above-described configurations without departing from the gist of the present disclosure. For example, as illustrated in FIG. 4, it is also possible to adopt a configuration in which a tapered part 10T' is formed over the entire region of the side surface of the protrusion 10P facing the second direction D2, that is, the entire extension length of the base portion R. According to this configuration, it is possible to cause the first casing 1 and the second casing 2 to relatively move more largely by the tapered part 10T'. This makes it possible to cause the first casing 1 and the second casing 2 to be brought strongly into close contact with each other.

### Second Embodiment

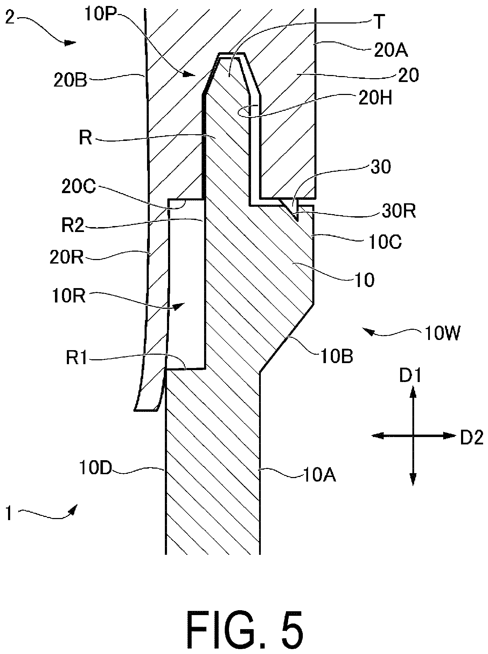

Next, a second embodiment of the present disclosure will be described with reference to FIG. 5. The same components as those of the first embodiment are denoted by the same reference signs, and detailed description thereof will be omitted. As illustrated in the figure, in the present embodiment, instead of the above-described tapered part 10T, a guiding projection 30 and a guiding groove 30R as guiding parts are formed in the first casing 1 and the second casing 2, respectively.

The guiding projection 30 protrudes from the second end surface 20C of the second casing 2 toward the other side in the first direction D1. The cross-sectional shape of the guiding projection 30 is a right triangle. More specifically, the oblique side in the cross section of the guiding projection 30 extends toward one side in the second direction D2 toward the other side in the first direction D1.

The guiding groove 30R accommodates the guiding projection 30. The guiding groove 30R is recessed from the first end surface 10S of the first casing 1 toward the other side in the first direction D1. The cross-sectional shape of the guiding groove 30R is the identical to the cross-sectional shape of the guiding projection 30. The term "identical" mentioned here refers to being substantially identical and accounts for design tolerances and manufacturing errors. In a state where the first casing 1 and the second casing 2 face each other before they are combined, the guiding groove 30R is formed at a position shifted to one side in the second direction D2 relative to the guiding projection 30. The guiding projection 30 and the guiding groove 30R may be continuously formed over the entire circumference of the first end surface 10S and the second end surface 20C, or a plurality of them may be provided at intervals.

According to the above configuration, when the protrusion 10P is inserted into the accommodating groove 20H, the guiding projection 30 is accommodated in the guiding groove 30R. Here, the guiding groove 30R is formed at a position shifted in the second direction D2 relative to the guiding projection 30. Due to this, by the oblique sides of the guiding projection 30 and the guiding groove 30R abutting on each other in a sliding manner, it is possible to relatively move the first casing 1 and the second casing 2 in the second direction D2. As a result, it is possible to cause the first casing 1 and the second casing 2 to be brought strongly into close contact with each other.

The second embodiment of the present disclosure has been described above. Note that various changes and modifications can be made to the above-described configurations without departing from the gist of the present disclosure. For example, in the second embodiment, an example in which the second casing 2 is provided with the guiding projection 30 and the first casing 1 is provided with the guiding groove 30R has been described. However, it is also possible to adopt a configuration in which the first casing 1 is provided with the guiding projection 30 and the second casing 2 is provided with the guiding groove 30R. The tapered part 10T described in the first embodiment can also be applied in combination with the configuration of the second embodiment.

Unlike the above embodiments, the casing unit 100 can also be used for accommodating mechanical devices other than the vehicular air conditioning device. The appearance of the casing unit 100 illustrated in FIG. 1 is an example, and various shapes and dimensional sizes can be made in accordance with design and specifications.

### Supplementary Notes

The casing unit 100 described in each embodiment is understood as follows, for example.
(1) The casing unit 100 according to a first aspect is the casing unit 100 including: the first casing 1; and the second casing 2 configured to be combined with the first casing 1 from the first direction D1, in which the first casing 1 includes the first casing main body 10, and the protrusion 10P that protrudes from the first casing main body 10 toward the second casing 2, the second casing 2 includes the second casing main body 20 provided with the accommodating groove 20H that accommodates the protrusion 10P, any one of the protrusion 10P and the second casing main body 20 is provided with a guiding part that relatively moves the first casing 1 and the second casing 2 in the second direction D2 intersecting the first direction D1, in response to combining the first casing 1 and the second casing 2 in the first direction D1, and the second casing 2 further includes the overlapping part 20R that overlaps the first casing main body 10 in the first direction D1 in the combined state, the overlapping part R being elastically deformable in response to the first casing 1 and the second casing 2 relatively moving in the second direction D2.

According to the above configuration, the first casing 1 and the second casing 2 relatively move in the second direction D2 by the guiding part, so that the first casing 1 and the second casing 2 are brought into a state of being strongly in close contact with each other. Since the part to be elastically deformed at the time of assembly is limited to only the overlapping part 20R, assembly can be easily performed without requiring a large force.

(2) In the casing unit 100 according to a second aspect, the dimension of the overlapping part 20R in the first direction D1 may be set to be larger than the dimension of the protrusion 10P in the first direction D1.

According to the above configuration, since the dimension of the overlapping part 20R is larger than that of the protrusion 10P, the overlapping part 20R can be more easily elastically deformed along with insertion of the protrusion 10P.

(3) In the casing unit 100 according to a third aspect, the protrusion 10P may be formed on the first end surface 10S of the first casing main body 10, the first end surface 10S facing the first direction D1, and, in a cross-sectional view orthogonal to the first direction D1, the protrusion 10P may include the tip portion T extending in the first direction D1, and the tapered part 10T serving as the guiding part extending in the second direction D2 from the tip portion T toward the first end surface 10S.

According to the above configuration, when the protrusion 10P is inserted into the accommodating groove 20H, the second casing 2 relatively moves in the second direction D2 along the tapered part 10T. This makes it possible to cause the first casing 1 and the second casing 2 to be brought strongly into close contact with each other.

(4) In the casing unit 100 according to a fourth aspect, the tapered part 10T' may be formed on the entire region of the surface of the protrusion 10P facing the second direction D2.

According to the above configuration, it is possible to cause the first casing 1 and the second casing 2 to relatively move more largely by the tapered part 10T'.

(5) In the casing unit 100 according to a fifth aspect, the protrusion 10P may be formed on the first end surface 10S of the first casing main body 10, the first end surface 10S facing the first direction D1, the accommodating groove 20H is formed on the second end surface 20C of the second casing main body 20, the second end surface 20C opposing the first end surface 10S, and the guiding part includes the guiding projection 30 protruding from any one of the first end surface 10S and the second end surface 20C toward the other of the first end surface 10S and the second end surface 20C, and the guiding groove 30R formed in the other of the first end surface 10S and the second end surface 20C, accommodating the guiding projection 30, and formed at a position shifted in the second direction D2 relative to the guiding projection 30.

According to the above configuration, when the protrusion 10P is inserted into the accommodating groove 20H, the guiding projection 30 is accommodated in the guiding groove 30R. The guiding groove 30R is formed at a position shifted in the second direction D2 relative to the guiding projection 30. This makes it possible to relatively move the first casing 1 and the second casing 2 in the second direction D2. As a result, it is possible to cause the first casing 1 and the second casing 2 to be brought strongly into close contact with each other.

### Industrial Applicability

According to the present disclosure, it is possible to provide a casing unit that has higher airtightness and liquid tightness and can be easily assembled.

### Reference Signs List

100 Casing unit
1 First casing
2 Second casing
3 Engaging portion
10 First casing main body
10A Main surface
10B Inclined surface
10C Parallel surface
10D Inner surface
10P Protrusion
10R Recess
10S First end surface
10T, 10T' Tapered part
10W Outer surface
20 Second casing main body
20A Outer surface
20B Inner surface
20C Second end surface
20H Accommodating groove
20R Overlapping part
30 Guiding projection
30R Guiding groove
C1 Corner
R Base portion
R1 Bottom surface
R2 Side surface
T Tip portion

## Claims

1. A casing unit comprising:
a first casing; and
a second casing configured to be combined with the first casing from a first direction, wherein
the first casing includes
a first casing main body, and
a protrusion that protrudes from the first casing main body toward the second casing,
the second casing includes
a second casing main body provided with an accommodating groove that accommodates the protrusion,
any one of the protrusion and the second casing main body is provided with a guiding part that relatively moves the first casing and the second casing in a second direction intersecting the first direction, in response to combining the first casing and the second casing in the first direction, and
the second casing further includes an overlapping part that overlaps the first casing main body in the first direction in the combined state, the overlapping part being elastically deformable in response to the first casing and the second casing relatively moving in the second direction.

2. The casing unit according to claim 1, wherein a dimension of the overlapping part in the first direction is set to be larger than a dimension of the protrusion in the first direction.

3. The casing unit according to claim 1 or 2, wherein
the protrusion is formed on a first end surface of the first casing main body, the first end surface facing the first direction, and
in a cross-sectional view orthogonal to the first direction, the protrusion includes a tip portion extending in the first direction, and a tapered part serving as the guiding part extending in the second direction from the tip portion toward the first end surface.

4. The casing unit according to claim 3, wherein the tapered part is formed on an entire region of a surface of the protrusion facing the second direction.

5. The casing unit according to any one of claims 1 to 4, wherein
the protrusion is formed on a first end surface of the first casing main body, the first end surface facing the first direction,
the accommodating groove is formed on a second end surface of the second casing main body, the second end surface opposing the first end surface, and
the guiding part includes
a guiding projection protruding from any one of the first end surface and the second end surface toward the other of the first end surface and the second end surface, and
a guiding groove formed in the other of the first end surface and the second end surface, accommodating the guiding projection and formed at a position shifted in the second direction relative to the guiding projection.
